(19) Europäisches Patentamt / European Patent Office / Office européen des brevets

(11) **EP 4 135 308 A1**

(12) **EUROPEAN PATENT APPLICATION**
published in accordance with Art. 153(4) EPC

(43) Date of publication:
**15.02.2023 Bulletin 2023/07**

(21) Application number: **21792195.6**

(22) Date of filing: **09.03.2021**

(51) International Patent Classification (IPC):
**H04N 5/232** (1985.01)    **H04N 5/235** (1985.01)
**G06F 3/01** (2006.01)

(86) International application number:
**PCT/CN2021/079663**

(87) International publication number:
**WO 2021/213031 (28.10.2021 Gazette 2021/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.04.2020 CN 202010321161**

(71) Applicant: **GUANGDONG OPPO MOBILE
TELECOMMUNICATIONS
CORP., LTD.
Dongguan, Guangdong 523860 (CN)**

(72) Inventor: **FANG, Pan
Dongguan, Guangdong 523860 (CN)**

(74) Representative: **Manitz Finsterwald
Patent- und Rechtsanwaltspartnerschaft mbB
Martin-Greif-Strasse 1
80336 München (DE)**

(54) **IMAGE SYNTHESIS METHOD AND RELATED APPARATUS**

(57)    Disclosed in the embodiments of the present application are an image synthesis method and a related apparatus, the method comprising: determining a target area on a preview image by means of eye tracking technology; on the basis of brightness parameters of the target area, determining multiple exposure parameter sets; setting a photographic apparatus with the multiple exposure parameter sets to acquire multiple reference images, each reference image corresponding to a different exposure parameter set; and synthesising the multiple reference images to obtain a target image. The embodiments of the present application reduce system power consumption and time delay, and improve image synthesis effects such that the obtained target image better meets user requirements.

```
┌──────────────────────────────────────────────┐
│ the electronic device determines a target     │── S201
│ area on a preview image by an eyeball          │
│ tracking technology                            │
└──────────────────────────────────────────────┘
                      │
                      ▼
┌──────────────────────────────────────────────┐
│ the electronic device determines a plurality  │── S202
│ of exposure parameter sets according to a      │
│ plurality of brightness parameters of the      │
│ target area                                    │
└──────────────────────────────────────────────┘
                      │
                      ▼
┌──────────────────────────────────────────────┐
│ the electronic device configures a camera      │── S203
│ module with the plurality of exposure          │
│ parameter sets to obtain a plurality of         │
│ reference images, and each of the plurality    │
│ of reference images corresponds to a            │
│ different one of the plurality of exposure      │
│ parameter sets                                 │
└──────────────────────────────────────────────┘
                      │
                      ▼
┌──────────────────────────────────────────────┐
│ the electronic device synthesizes the          │── S204
│ plurality of reference images to obtain a       │
│ target image                                   │
└──────────────────────────────────────────────┘
```

FIG. 2A

EP 4 135 308 A1

## Description

## TECHNICAL FIELD

The present disclosure relates to the technical field of electronic devices, and in particular to an image synthesis method and a related apparatus.

## BACKGROUND

At present, a technology of multi-frame synthesis is often used in video preview and recording. That is, a plurality of images obtained based on different indicators are synthesized into one image for output, so that the synthesized image has a better effect. The plurality of images may be distinguished by indicators such as a focal length and an exposure duration. Among them, the multi-frame synthesis based on different exposure values is commonly used.

In a technology of synthesizing the plurality of images by setting different exposure durations, some scenes (such as image preview or video scenes) need to synthesize a large number of images (for example, six images or eight images with different exposure values are synthesized into one frame), which will greatly increase a power consumption and a computational burden of a system, so that the multi-frame synthesis may only be used in scenes with low requirements for real-time performance, such as photograph, but is limited for usage in scenes with requirements for frame rates such as preview and video recording.

## SUMMARY

Some embodiments of the present disclosure provide an image synthesis method and a related apparatus, so as to reduce a power consumption and a time-delay of a system, improve the image synthesis effect, and the obtained target picture meets the demands of a user better.

In a first aspect, some embodiments of the present disclosure provide an image synthesis method. The method includes the following operations: determining a target area on a preview image by an eyeball tracking technology; determining a plurality of exposure parameter sets according to a plurality of brightness parameters of the target area; configuring a camera module with the plurality of exposure parameter sets to obtain a plurality of reference images, and each of the plurality of reference images corresponding to a different one of the plurality of exposure parameter sets; and synthesizing the plurality of reference images to obtain a target image.

In a second aspect, some embodiments of the present disclosure provide an image synthesis apparatus. The image synthesis device includes a processing unit. The processing unit is configured to determine a target area on a preview image by an eyeball tracking technology; determine a plurality of exposure parameter sets according to a plurality of brightness parameters of the target area; configure a camera module with the plurality of exposure parameter sets to obtain a plurality of reference images, and each of the plurality of reference images corresponding to a different one of the plurality of exposure parameter sets; and synthesize the plurality of reference images to obtain a target image.

In a third aspect, some embodiments of the present disclosure provide an electronic device. The electronic device includes a processor, a memory, a communication interface, and one or more programs. The one or more programs are stored in the memory and configured to be executing by the processor. The one or more programs include instructions for performing the operations in any one of the methods according to the first aspect of some embodiments of the present disclosure.

In a fourth aspect, some embodiments of the present disclosure provide a chip. The chip includes a processor configured to call and run a computer program from a memory, so that a device installed with the chip executes part or all of the operations described in any one of the methods according to the first aspect of some embodiments of the present disclosure.

In a fifth aspect, some embodiments of the present disclosure provide a computer-readable storage medium. The computer-readable storage medium stores a computer program for an exchange of electronic data. The computer program enables a computer to execute part or all of the operations described in any one of the methods according to the first aspect of some embodiments of the present disclosure.

In a sixth aspect, some embodiments of the present disclosure provide a computer program product. The computer program product includes a non-transitory computer-readable storage medium storing a computer program, and the computer program is operable to cause a computer to execute part or all of the operations described in any one of the methods according to the first aspect of some embodiments of the present disclosure. The computer program product may be a software installation package.

It can be seen that, in some embodiments of the present disclosure, the electronic device may determine the target area on the preview image by the eyeball tracking technology, determine the plurality of exposure parameter sets according to a plurality of brightness parameters of the target area, configure the camera module with the plurality of exposure parameter sets to obtain the plurality of reference images, and finally synthesize the plurality of reference images to obtain the target image. Herein, each of the plurality of reference images corresponding to a different one of the plurality of exposure parameter sets. It can be seen that the electronic device may perform an image synthesis technology according to the target area of focused by the user and obtained by the eyeball tracking technology, such that an image synthesis effect may be improved, and the obtained target image meets the user's demands better. Furthermore, only the brightness parameters of the target area are used to determine the exposure parameter set of each frame of synthesized images. In this way, the exposure parameter sets may be accurately determined, thereby reducing the number of reference images, and reducing power a consumption and a time-delay of a system during an image synthesis process.

## BRIEF DESCRIPTION OF THE DRAWINGS

In order to illustrate the technical solutions in some embodiments of the present disclosure more clearly, the following will briefly introduce the figures needed to be used in the description of some embodiments or the related art. Obviously, the drawings in the following description are only some embodiments of the present disclosure, and those skilled in the art may derive other figures from these figures without paying any creative work.

FIG. 1A is a schematic structural diagram of an electronic device provided by some embodiments of the present disclosure.
FIG. 1B is a schematic diagram of a software and hardware system architecture of the electronic device provided by some embodiments of the present disclosure.
FIG. 1C is another schematic structural diagram of the electronic device provided by some embodiments of the present disclosure.
FIG. 1D is a schematic view of arranging a spotlight on a side frame of the electronic device provided by some embodiments of the present disclosure.
FIG. 2A is a schematic flowchart of an image synthesis method provided by some embodiments of the present disclosure.
FIG. 2B is a schematic view illustrating a relationship between a gaze point and a target area provided by some embodiments of the present disclosure.
FIG. 2C is a schematic view illustrating a relationship between the gaze point and a preset area provided by some embodiments of the present disclosure.
FIG. 3 is a schematic flowchart of another image synthesis method provided by some embodiments of the present disclosure.
FIG. 4 is a schematic flowchart of a further image synthesis method provided by some embodiments of the present disclosure.
FIG. 5 is a block diagram illustrating distributed functional units of an image synthesis apparatus provided by some embodiments of the present disclosure.
FIG. 6 is a block diagram illustrating integrated functional units of an image synthesis apparatus provided by some embodiments of the present disclosure.

## DETAILED DESCRIPTION

In order to enable those skilled in the art to better understand a scheme of the present disclosure, the technical solutions in some embodiments of the present disclosure will be described clearly and completely with reference to the figures in some embodiments of the present disclosure. Obviously, the described embodiments are only a part of the embodiments of the present disclosure, rather than all the embodiments. Based on some embodiments of the present disclosure, all other embodiments obtained by those skilled in the art without paying any creative work are within the scope of the present disclosure.

The terms "first", "second", and the like in the description, claims, and aforesaid drawings of the present disclosure are used to distinguish different objects, but not to describe a specific sequence. In addition, the terms "including", "having", and any variations thereof are intended to cover non-exclusive inclusions. For example, a process, method, system, product, or device that includes a series of steps or units is not limited to the listed steps or units, but optionally also includes unlisted steps or units, or optionally also includes other steps or units inherent to the process, method, product or device.

The reference to "embodiment" herein means that a specific feature, structure, or characteristic described in connection with some embodiments may be included in at least one embodiment of the present disclosure. The appearances of the phrase at various positions in the specification are not necessarily all referring to the same embodiment, nor are separate or alternative embodiment mutually exclusive with other embodiments. It is explicitly and implicitly understood by those skilled in the art that some embodiments described herein may be combined with other embodiments.

The electronic device involved in some embodiments of the present disclosure may be an electronic device with a communication capability. The electronic device may include various handheld devices, vehicle-mounted devices, wearable devices, computing devices, or other processing equipment connected to wireless modem, as well as various forms of user equipments (UEs), mobile stations (MS), terminal devices etc., which have wireless communication capabilities.

In order to better understand the scheme of some embodiments of the present disclosure, related terms and concepts that may be involved in some embodiments of the present disclosure are firstly introduced below.

(1) Eyeball tracking, also known as eye tracking, human eye tracking, gaze point tracking, etc., refers to a mechanism for determining a gazing direction and a gaze point of a user based on fusion image acquisition technology and sight estimation technology.
(2) A gaze point refers to a point on a plane of a screen on which the sight of a human eye falls.

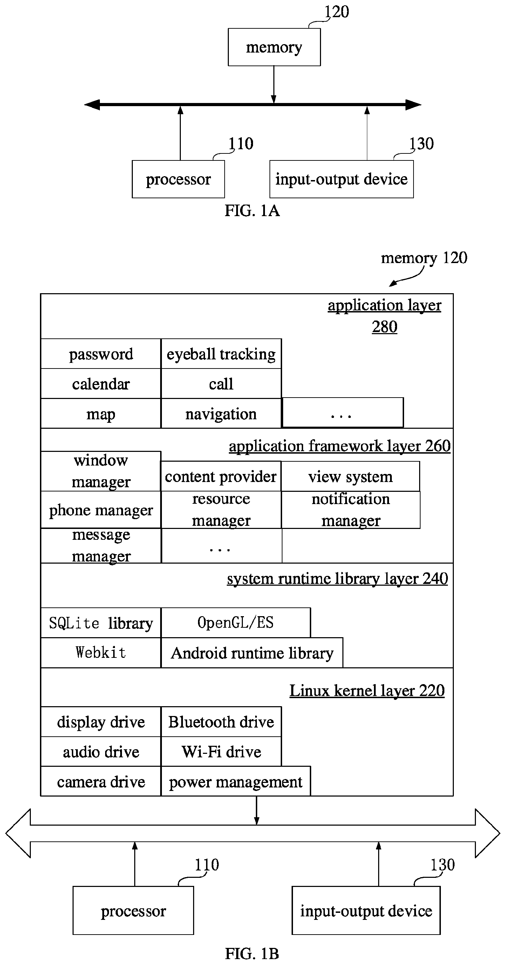

As shown in FIGS. 1A to 1D, software and hardware operating environments of the image synthesis method disclosed in the present disclosure are introduced as follows.

FIG. 1A shows a structural block diagram of an electronic device 100 with a communication capability provided by some embodiments of the present disclosure. The electronic device 100 may include various handheld devices, vehicle-mounted devices, wearable devices, computing devices, or other processing equipment connected to the wireless modem, as well as various forms of user equipments (UEs), mobile stations (MS), terminal devices etc., which have wireless communication capabilities. The electronic device 100 in some embodiments of the present disclosure may include one or more of the following components: a processor 110, a memory 120, and an input-output device 130.

The processor 110 may include one or more processing cores. The processor 110 uses various interfaces and lines to connect various parts of the entire electronic device 100, executes various functions of the electronic device 100 and processes data by running or executing an instruction, a program, a code set, or an instruction set stored in the memory 120, and calling the data stored in the memory 120. The processor 110 may include one or more processing units. For example, the processor 110 may include a central processing unit (CPU), an application processor (AP), a modulation and demodulation processor, a graphics processing unit (GPU), an image signal processor (ISP), a controller, a video codec, a digital signal processor (DSP), a baseband processor, and/or a neural-network process processing unit (NPU), etc. The controller may be the nerve center and the command center of the electronic device 100. The controller may generate an operation control signal according to an instruction operation code and a timing signal to complete the control of fetching and executing instructions. The CPU mainly handles an operating system, a user interface, applications, and the like. The GPU is responsible for rendering and drawing display contents. The modem is configured to handle wireless communication. The digital signal processor is configured to process digital signals, not only processing digital image signals, but also processing other digital signals. For example, when the electronic device 100 selects a frequency point, the digital signal processor is configured to perform Fourier transform on the frequency point energy and so on. The video codec is configured to compress or decompress digital video. The electronic device 100 may support one or more video codecs. In this way, the electronic device 100 may play or record videos in various encoding formats. For example, moving picture experts group (MPEG) 1, MPEG2, MPEG3, MPEG4, and so on. The NPU is a neural-network (NN) computing processor. By referring to the structure of biological neural networks, such as the transfer mode between neurons in the human brain, the NPU may quickly process input information, and continuously learn by itself. Applications such as intelligent cognition of the electronic device 100 or the like may be implemented through the NPU, such as image recognition, face recognition, speech recognition, text understanding, and the like.

A memory may be provided in the processor 110 for storing instructions and data. In some embodiments, the memory in the processor 110 is cache memory. The memory may store instructions or data that have just been used or recycled by the processor 110. If the processor 110 needs to use the instructions or the data again, the instructions or the data may be called directly from the memory. In this way, repeated access is avoided, the waiting time of the processor 110 is reduced, and the system efficiency is improved.

The processor 110 may include one or more interfaces, such as an inter-integrated circuit (I2C) interface, an inter-integrated circuit sound (I2S) interface, a pulse code modulation (PCM) interface, a universal asynchronous receiver/transmitter (UART) interface, a mobile industry processor interface (MIPI), a general-purpose input/output (GPIO) interface, a subscriber identity module (SIM) interface, and/or a universal serial bus (USB) interface, etc.

The I2C interface is a bidirectional synchronous serial bus that includes a serial data line (SDA) and a serial clock line (SCL). The processor 110 may include multiple groups of I2C interfaces. A touch sensor, a charger, a flash, a camera, etc. may be respectively coupled to processor 110 through different I2C interfaces. For example, the processor 110 may be coupled to the touch sensor through the I2C interface, so that the processor 110 communicates with the touch sensor through the I2C interface, so as to realize a touch function of the electronic device 100.

The I2S interface may be used for audio communication. The processor 110 may include multiple groups of I2S interfaces, and is coupled with an audio module through the I2S interface to implement communication between the processor 110 and the audio module. The audio module may transmit an audio signal to a wireless communication module through the I2S interface, so as to realize a function of answering calls through a Bluetooth headset.

The PCM interface may also be used for the audio communication, such as sampling, quantizing, and encoding an analog signal. The audio module and the wireless communication module may be coupled to each other through the PCM interface, and specifically, the audio module may transmit the audio signal to the wireless communication module through the PCM interface, so as to realize the function of answering the calls through the Bluetooth headset. Both the I2S interface and the PCM interface may be used for the audio communication.

The UART interface is a universal serial data bus used for asynchronous communication. The bus may be a bidirectional communication bus. The bus may be configured to convert data to be transmitted between serial communication and parallel communication. The UART interface is typically configured to connect the processor 110 with the wireless communication module. For example, the processor 110 communicates with a Bluetooth module in the wireless communication module through the UART interface to realize the Bluetooth function. The audio module may transmit the audio signal to the wireless communication module through the UART interface, so as to realize the function of playing music through the Bluetooth headset.

The MIPI interface may be configured to connect the processor 110 with peripheral devices such as a display screen and a camera. The MIPI interface includes a camera serial interface (CSI), a display serial interface (DSI), etc. In some embodiments, the processor 110 communicates with the camera through a CSI interface, so as to implement a photographing function of the electronic device 100. The processor 110 communicates with the display screen through the DSI interface to implement a display function of the electronic device 100.

The GPIO interface may be configured by software. The GPIO interface may be configured as a control signal or as a data signal. In some embodiments, the GPIO interface may be configured to connect the processor 110 with the camera, the display screen, the wireless communication module, the audio module, a sensor module, and the like. The GPIO interface may also be configured as the I2C interface, the I2S interface, the UART interface, the MIPI interface, etc.

The USB interface is an interface that conforms to the USB standard specification, and may specifically be a Mini USB interface, a Micro USB interface, a USB Type C interface, and the like. The USB interface may be configured to be connected a charger to charge the electronic device 100, and may also be configured to transmit data between the electronic device 100 and the peripheral devices. The USB interface may also be configured to be connected headphones to play audio through the headphones. The interface may also be configured to be connected other electronic devices, such as augmented reality (AR) devices.

It can be understood that the aforementioned processor 110 may be mapped as a system on a chip (SOC) in an actual product. The aforementioned processing units and/or interfaces may not be integrated into the processor 110, and a communication chip or an electronic component may be used alone to achieve the corresponding functions. The interface connection relationships among the aforesaid modules are only a schematic illustration, and do not constitute a unique limitation to a structure of the electronic device 100.

The memory 120 may include a random access memory (RAM), or a read-only memory (ROM). In some embodiments, the memory 120 may include a non-transitory computer-readable storage medium. The memory 120 may be configured to store an instruction, a program, a code, a code set, or an instruction set. The memory 120 may include a program storage area and a date storage area. The program storage area may be configured to store instructions configured to implement an operation system, instructions configured to achieve at least one function (such as a touch function, a sound playback function, an image playback function, and the like), instructions configured to implement the following methods of various embodiments, and the like. The operation system may be an Android system, including a system of deep development based on Android system, or an IOS system developed by Apple Inc, including a system of deep development based on IOS system, or other systems. The data storage area may store the data created by the terminal, such as a phonebook, video and audio data, chatting records, and the like.

The electronic device 100 may adopt a layered architecture, an event-driven architecture, a micro kernel architecture, a micro service architecture, or a cloud architecture. Some embodiments of the present disclosure exemplify the software architecture of the electronic device 100 by taking the layered architecture of the Android system and the IOS system as an example.

As shown in FIG. 1B, FIG. 1B is a schematic diagram of the software and hardware system architecture provided with the Android system. The memory 120 may store a Linux kernel layer 220, a system runtime library layer 240, an application framework layer 260, and an application layer 280. The layers communicate with each other through software interfaces. The Linux kernel layer 220, the system runtime library layer 240, and the application framework layer 260 belong to the operating system space.

The application layer 280 belongs to the user space, and at least one application runs in the application layer 280. The applications may be native applications that come with the operating system, or third-party applications developed by third-party developers. Specifically, the applications may include password, eyeball tracking, camera, photo library, calendar, call, map, navigation, WLAN, Bluetooth, music, video, short message, and other applications.

The application framework layer 260 provides various APIs that may be used for building applications in the application layer. The developers may also build their own applications by using these APIs, such as a window manager, a content provider, a view system, and a phone manager, a resource manager, a notification manager, a message manager, an activity manager, a package manager, and a location manager.

A window manager is configured to manage window programs. The window manager may obtain a size of the display screen, determine whether there is a status bar, lock the screen, take screenshots, etc.

The content provider is configured to store and retrieve data and allow these data to be accessible by the applications. The data may include videos, images, audios, calls made and received, browsing history and bookmarks, phone book, etc.

The view system includes visual controls, such as controls for displaying text, controls for displaying pictures, and so on. The view system may be configured to build the applications. A display interface may be consisted of one or more views. For example, the display interface including short message notification icon may include a view for displaying text and a view for displaying pictures.

The phone manager is configured to provide the communication function of the electronic device 100. For example, the phone manager is configured to manage a call status (such as connecting, hanging up, etc.).

The resource manager provides various resources for the applications, such as localization strings, icons, pictures, layout files, video files, and so on.

The notification manager enables the applications to display notification information in a status bar, convey notification-type messages, and may disappear automatically after a brief pause without user interaction. For example, the notification manager is configured to notify download completion, remind messages, etc. The notification manager may also display notifications in the status bar at the top of the system in form of graphs or scroll bar text, such as notifications of applications running in the background, and notifications on the screen in form of dialog windows. For example, text information is prompted in the status bar, a prompt sound is issued, the electronic device vibrates, and the indicator light flashes.

The message manager may be configured to store the data of the message reported by each APP, and process the data reported by each APP. Specifically, the data of the message may include the ID of a message (message ID), the ID of an APP (APPID), a processing status of a message (status), happen time of a message (happen time), the type of a message (msg type), and description of a message (description). The processing status of the message may include two types: unprocessed and processed. When the processing status of the message is unprocessed, a status field is 0; when the processing status of the message is processed, the status field is 1.

In one possible implementation, the message manager may be a part of the notification manager.

The system runtime library layer 240 provides main feature support for the Android system by various C/C++ libraries. For example, an SQLite library provides support for a database, an OpenGL/ES library provides support for 3D drawing, and a Webkit library provides support for a browser core. The system runtime library layer 240 may further provide an Android runtime library. The Android runtime library may provide some core libraries to allow a developer to write an Android application by using the Java language.

The Linux inner kernel layer 220 provides an underlying drive for various hardware of the electronic device 100, such as a display drive, an audio drive, a camera drive, a Bluetooth drive, a Wi-Fi drive, and power management.

It should be understood that the image synthesis method described in some embodiments of the present disclosure may be applied to the Android system and other operating systems, such as the IOS system. Herein, only the Android system is taken as an example, but it does not constitute a limitation.

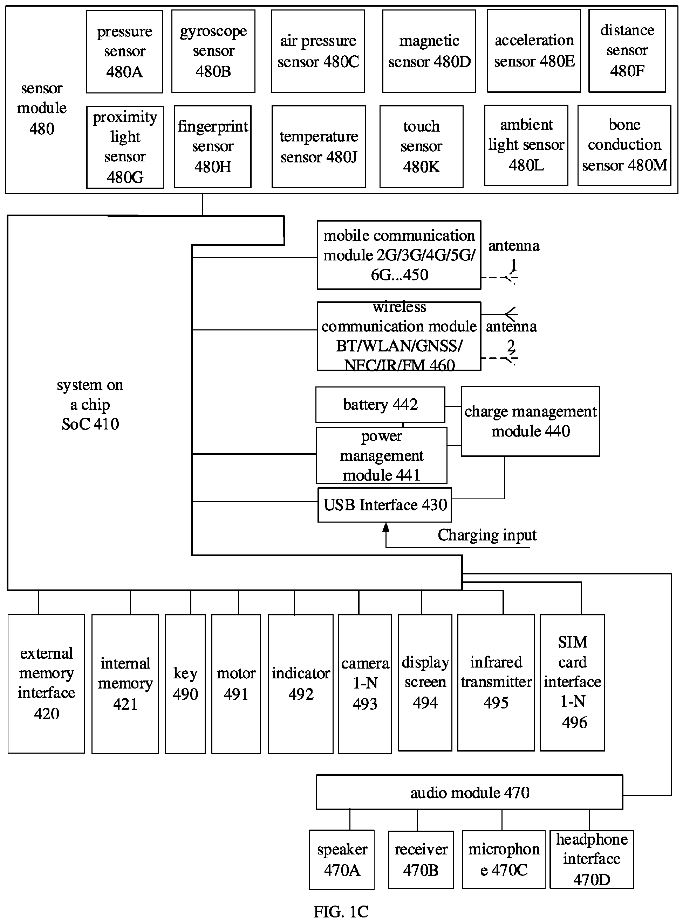

The following describes the form of a current common electronic device in detail with reference to FIG. 1C. It can be understood that the structures illustrated in some embodiments of the present disclosure do not constitute a specific limitation to the electronic device 100. In other embodiments of the present disclosure, the electronic device 100 may include more or less components than shown, or combine some components, or separate some components, or arrange different components. The illustrated components may be implemented in hardware, software, or a combination of software and hardware.

As shown in FIG. 1C, the electronic device 100 includes a system on a chip 410, an external memory interface 420, an internal memory 421, a universal serial bus (USB) interface 430, a charge management module 440, a power management module 441, a battery 442, an antenna 1, an antenna 2, a mobile communication module 450, a wireless communication module 460, an audio module 470, a speaker 470A, a receiver 470B, a microphone 470C, a headphone interface 470D, a sensor module 480, a key 490, a motor 491, an indicator 492, a camera 493, a display screen 494, an infrared transmitter 495, and a subscriber identification module (SIM) card interface 496, and the like. The sensor module 480 may include a pressure sensor 480A, a gyroscope sensor 480B, an air pressure sensor 480C, a magnetic sensor 480D, an acceleration sensor 480E, a distance sensor 480F, a proximity light sensor 480G, a fingerprint sensor 480H, a temperature sensor 480J, a touch sensor 480K, and ambient light sensor 480L, a bone conduction sensor 480M, etc.

The wireless communication function of the electronic device 100 may be implemented by the antenna 1, the antenna 2, the mobile communication module 450, the wireless communication module 460, the modulation and demodulation processor, the baseband processor, and the like.

The antenna 1 and the antenna 2 are configured to transmit and receive an electromagnetic wave signal. Each antenna in the electronic device 100 may be configured to cover a single or multiple communication frequency bands. Different antennas may also be multiplexed to improve antenna utilization. For example, the antenna 1 may be multiplexed as a diversity antenna of a wireless local area network. In other embodiments, the antenna may be used in conjunction with a tuning switch.

The mobile communication module 450 may provide a wireless communication solution including 2G/3G/4G/5G/6G, etc. applied to the electronic device 100. The mobile communication module 450 may include at least one filter, switch, power amplifier, low noise amplifier (LNA), and the like. The mobile communication module 450 may receive electromagnetic waves from the antenna 1, perform further processing (such as filtering, amplifying, or the like) on the received electromagnetic waves, and transmit the processed electromagnetic waves to the modulation and demodulation processor for demodulation. The mobile communication module 450 may also amplify the signal modulated by the modulation and demodulation processor, and then convert the signal into electromagnetic waves for radiation out of the electronic device 100 through the antenna 1. In some embodiments, at least part of function modules of the mobile communication module 450 may be arranged in the processor 440. In some embodiments, at least part of the function modules of the mobile communication module 450 may be arranged in the same component as at least part of modules of the processor 440.

The modulation and demodulation processor may include a modulator and a demodulator. The modulator is configured to modulate a low frequency baseband signal to be sent into a medium and high frequency signal. The demodulator is configured to demodulate the received electromagnetic wave signal into a low frequency baseband signal. Then the demodulator transmits the demodulated low-frequency baseband signal to the baseband processor for processing. The low frequency baseband signal is processed by the baseband processor and transmitted to the application processor. The application processor outputs a sound signal through an audio device (which is not limited to the speaker 470A, receiver the 470B, etc.), or displays an image or a video through the display screen 494. In some embodiments, the modulation and demodulation processor may be a stand-alone device. In other embodiments, the modulation and demodulation processor may be independent of the processor 440, and may be provided in the same component as the mobile communication module 450 or other function modules.

The wireless communication module 460 may provide wireless communication solutions such as wireless local area networks (WLAN) (such as wireless fidelity (Wi-Fi) networks), Bluetooth (BT), global navigation satellite system (GNSS), frequency modulation (FM), near field communication (NFC), infrared technology (IR), and so on. The wireless communication module 460 may be one or more devices that are integrated with at least one communication processing module. The wireless communication module 460 receives the electromagnetic wave via the antenna 2, modulates a frequency of the electromagnetic wave signal and filters the electromagnetic wave signal, and sends the processed signal to the processor 440. The wireless communication module 460 may also receive the signal transmitted from the processor 440, modulate a frequency of the signal and amplify the signal, and then convert the signal into an electromagnetic wave and radiate the converted electromagnetic wave out of the electronic device 100 through the antenna 2.

In some embodiments, the antenna 1 of the electronic device 100 is coupled with the mobile communication module 450, and the antenna 2 is coupled with the wireless communication module 460, so that the electronic device 100 may communicate with the network and other devices through the wireless communication technology. The wireless communication technology may include global system for mobile communications (GSM), general packet radio service (GPRS), code division multiple access (CDMA), wideband code division multiple access (WCDMA), time-division code division multiple access (TD-SCDMA), long term evolution (LTE), BT, GNSS, WLAN, NFC, FM, and/or IR technology etc. The GNSS may include a global positioning system (GPS), a global navigation satellite system (GLONASS), a beidou satellite navigation system (BDS), a quasi-zenith satellite system (QZSS), and/or satellite based augmentation systems (SBAS).

The charging management module 440 is configured to receive charging input from the charger. The charger may be a wireless charger or a wired charger. In some wired charging embodiments, the charging management module 440 may receive the charging input from the wired charger through the USB interface 430. In some wireless charging embodiments, the charging management module 440 may receive wireless charging input through a wireless charging coil of the electronic device 100. When charging the battery 442, the charging management module 440 may also supply power to the electronic device through the power management module 441.

The power management module 441 is configured to be connected to the battery 442, the charging management module 440, and the processor 440. The power management module 441 receives input from the battery 442 and/or the charging management module 440, and supplies power to the processor 440, the internal memory 421, the external memory, the display screen 494, the camera 493, the wireless communication module 460, and the like. The power management module 441 may also be configured to monitor parameters such as battery capacity, battery cycle times, battery health status (such as leakage or impedance). In some other embodiments, the power management module 441 may also be provided in the processor 440. In other embodiments, the power management module 441 and the charging management module 440 may also be provided in the same component.

The electronic device 100 implements a display function through a GPU, the display screen 494, the application processor, and the like. The GPU is a microprocessor for image processing, and is connected to the display screen 494 and the application processor. The GPU is configured to perform mathematical and geometric calculations for graphics rendering. The processor 440 may include one or more GPUs that execute program instructions to generate or alter display information.

The display screen 494 is configured to display an image, a video, and the like. The display screen 494 includes a display panel. The display panel may be a liquid crystal display (LCD), an organic light-emitting diode (OLED), an active-matrix organic light-emitting diode (AMOLED), a flexible light-emitting diode (flex light-emitting diode, FLED), a Miniled, a MicroLED, a Micro-OLED, quantum dot light emitting diode (quantum dot light emitting diodes, QLED), and so on. In some embodiments, the electronic device 100 may include 1 or N display screens 494, and N is a positive integer greater than 1. In some embodiments of the present disclosure, the display screen 494 may be configured to display red dots or a number of red dots on the icon of each APP, to prompt the user that there is a new message to be processed.

The electronic device 100 may realize the shooting function through the ISP, the camera 493, the video codec, the GPU, the display screen 494, and the application processor.

The ISP is configured to process the data fed back by the camera 493. For example, when taking a picture, a shutter is opened, light is transmitted to a photosensitive element of the camera through a lens, a light signal is converted into an electrical signal, and the photosensitive element of the camera transmits the electrical signal to the ISP for processing to convert the electrical signal into an image visible to a naked eye. The ISP may also perform algorithm optimization on an image noise, a brightness, and a skin tone. The ISP may also optimize an exposure, a color temperature, and other parameters of a shooting scene. In some embodiments, the ISP may be arranged in the camera 493.

The camera 493 is configured to capture a still image or video. An object is projected through the lens to generate an optical image onto the photosensitive element. The photosensitive element may be a charge coupled device (CCD) or a complementary metal-oxide-semiconductor (CMOS) phototransistor. The photosensitive element converts an optical signal into an electrical signal, and then transmits the electrical signal to the ISP, and the ISP is configured to convert the electrical signal into a digital image signal. The ISP outputs the digital image signal to the DSP for processing. The DSP converts the digital image signal into standard RGB, YUV, or other formats of image signals. In some embodiments, the electronic device 100 may include 1 or N cameras 493, and N is a positive integer greater than 1.

The external memory interface 420 may be configured to be connected an external memory card, such as a Micro SD card, so as to expand a storage capacity of the electronic device 100. The external memory card communicates with the processor 440 through the external memory interface 420 to realize a data storage function. For example, files like a music, a video, etc. is stored in the external memory card.

The internal memory 421 may be configured to store a computer executable program code, and the computer executable program code includes instructions. The processor 440 executes various functional applications and data processing of the electronic device 100 by executing the instructions stored in the internal memory 421. The internal memory 421 may include a storage program area and a storage data area. The storage program area may store an operating system, an application program required for at least one function (such as a sound playback function, an image playback function, etc.), and the like. The storage data area may store data (such as audio data, a phone book, etc.) created during the use of the electronic device 100 and the like. In addition, the internal memory 421 may include a high-speed random access memory, and may also include a non-volatile memory, such as at least one magnetic disk storage device, flash memory device, universal flash storage (UFS), and the like. In some embodiments of the present disclosure, the internal memory 421 may be configured to store the data of each APP message, and may also be configured to store an elimination strategy for the red dot corresponding to each APP.

The electronic device 100 may implement audio functions, such as music playback, recording, etc., through the audio module 470, the speaker 470A, the receiver 470B, the microphone 470C, the earphone interface 470D, an application processor, and the like.

The audio module 470 is configured to convert digital audio information into an analog audio signal output, and also configured to convert an analog audio input into a digital audio signal. The audio module 470 may also be configured to encode and decode an audio signal. In some embodiments, the audio module 470 may be arranged in the processor 440, or some function modules of the audio module 470 may be arranged in the processor 440.

The speaker 470A, also referred to as a "loudspeaker", is configured to convert an audio electrical signal into a sound signal. A music or a hands-free call may be listened from the electronic device 100 through the speaker 470A.

The receiver 470B, also referred to as "earpiece", is configured to convert an audio electrical signal into a sound signal. A call or a voice message is answered in the electronic device 100, the voice may be answered by placing the receiver 470B close to a human ear.

The microphone 470C, also called "voice tube", "mike", is configured to convert a sound signal into an electrical signal. When making a call or sending a voice message, the user may make a sound by inputting the sound signal into the microphone 470C by means of approaching the microphone 470C to the human mouth. The electronic device 100 may be provided with at least one microphone 470C. In other embodiments, the electronic device 100 may be provided with two microphones 470C, and the two microphones 470C may reduce a noise in addition to collecting a sound signal. In other embodiments, the electronic device 100 may further have three, four, or more microphones 470C to collect the sound signal, reduce noise, identify sound sources, and implement directional recording functions.

The earphone interface 470D is configured to be connected a wired earphone. The earphone interface 470D may be a USB interface 430, a 3.5mm open mobile terminal platform (OMTP) standard port, or a cellular telecommunications industry association of the USA (CTIA) standard interface.

The pressure sensor 480A is configured to sense a pressure signal, and may convert the pressure signal into an electrical signal. In some embodiments, the pressure sensor 480A may be arranged on display screen 494. There are many types of pressure sensors 480A, such as resistive pressure sensors, inductive pressure sensors, capacitive pressure sensors, and the like. A capacitive pressure sensor may include at least two parallel plates made of conductive material. A capacitance between electrodes changes when a force is applied to the pressure sensor 480A. The electronic device 100 determines the intensity of the pressure based on the change in the capacitance. When a touch operation acts on the display screen 494, the electronic device 100 detects the intensity of the touch operation according to the pressure sensor 480A. The electronic device 100 may also calculate a touched position according to a detection signal of the pressure sensor 480A. In some embodiments, touch operations acting on the same touch position but with different intensities may correspond to different operation instructions. For example, when a touch operation with the intensity less than a first pressure threshold acts on a short message application icon, an instruction for viewing the short message is executed. When a touch operation with the intensity greater than or equal to the first pressure threshold acts on the short message application icon, an instruction for creating a new short message is executed.

The gyroscope sensor 480B may be configured to determine a moving posture of the electronic device 100. In some embodiments, an angular velocity of the electronic device 100 about three axes (namely, x, y, and z axes) may be determined by the gyroscope sensor 480B. The gyroscope sensor 480B may be used for image stabilization. Exemplarily, when the shutter is pressed, the gyroscope sensor 480B detects a shaking angle of the electronic device 100, calculates a compensated distance of the lens module according to the angle, and allows the lens to counteract the shaking of the electronic device 100 through a reverse motion, so as to reduce the occurrence of the shaking of the electronic device 100. The gyroscope sensor 480B may also be used for navigation and somatic game scenarios.

The air pressure sensor 480C is configured to measure an air pressure. In some embodiments, the electronic device 100 calculates an altitude through the air pressure value measured by the air pressure sensor 480C to assist in positioning and navigation.

The magnetic sensor 480D includes a Hall sensor. The electronic device 100 may detect an opening and closing state of a flip or a holster using the magnetic sensor 480D. In some embodiments, when the electronic device 100 is a flip device, the electronic device 100 may detect the opening and closing state of the flip by using the magnetic sensor 480D. Further, the electronic device 100 may be set to be automatically unlocked according to the detected opening and closing state of the flip or the holster.

The acceleration sensor 480E may detect a magnitude of an acceleration of the electronic device 100 in various directions (generally three axes). The magnitude and the direction of the gravity may be detected when the electronic device 100 is stationary. The acceleration sensor 480E may also be configured to identify a posture of the electronic device 100, and may be used in applications such as horizontal-vertical-screen switching, pedometers, etc.

The distance sensor 480F is configured to measure a distance. The electronic device 100 may measure the distance by an infrared or a laser. In some embodiments, when taking a picture, the electronic device 100 may use the distance sensor 480F to measure the distance to achieve fast focusing.

The proximity light sensor 480G may include, for example, a light emitting diode (LED) and a light detector, such as a photodiode. The light emitting diode may be an infrared light emitting diode. The electronic device 100 emits infrared light to the outside by the light emitting diode. The electronic device 100 uses the photodiode to detect infrared reflected light from nearby objects. When sufficient reflected light is detected, it may be determined that there is an object near the electronic device 100. When insufficient reflected light is detected, the electronic device 100 may determine that there is no object near the electronic device 100. The electronic device 100 may use the proximity light sensor 480G to detect that the user holds the electronic device 100 in a position close to the ear to talk, so as to automatically turn off the screen to save power. The proximity light sensor 480G may also be configured to automatically unlock and lock the screen in a holster mode or a pocket mode.

The ambient light sensor 480L is configured to sense an ambient light brightness. The electronic device 100 may adaptively adjust the brightness of the display screen 494 according to the sensed ambient light brightness. The ambient light sensor 480L may also be configured to automatically adjust a white balance when taking a picture. The ambient light sensor 480L may also cooperate with the proximity light sensor 480G to detect whether the electronic device 100 is in a pocket to reduce the occurrence of accidental touch.

The fingerprint sensor 480H is configured to collect a fingerprint. The electronic device 100 may use characteristics of the collected fingerprint to realize fingerprint unlocking, access an application lock, take a picture with the fingerprint, answer an incoming call with the fingerprint, and the like.

The temperature sensor 480J is configured to detect the temperature. In some embodiments, the electronic device 100 utilizes the temperature detected by the temperature sensor 480J to execute a temperature processing strategy. For example, when the temperature reported by the temperature sensor 480J exceeds a threshold value, the electronic device 100 may reduce a performance of the processor located near the temperature sensor 480J in order to reduce power consumption and implement thermal protection. In other embodiments, when the temperature is less than another threshold, the electronic device 100 heats the battery 442 to avoid abnormal shutdown of the electronic device 100 caused by the low temperature. In some other embodiments, when the temperature is less than a further threshold, the electronic device 100 boosts an output voltage of the battery 442 to avoid abnormal shutdown caused by the low temperature.

The touch sensor 480K is also called "touch panel". The touch sensor 480K may be disposed on the display screen 494, and the touch sensor 480K and the display screen 494 constitute a touch screen cooperatively, which is also called a "touch panel". The touch sensor 480K is configured to detect a touch operation on or near the touch sensor. The touch sensor may transmit the detected touch operation to the application processor to determine a type of touch event. A visual output related to the touch operation may be provided through the display screen 494. In other embodiments, the touch sensor 480K may also be disposed on a surface of the electronic device 100 in a position different from a position in which the display screen 494 is located.

The bone conduction sensor 480M may be configured to acquire a vibration signal. In some embodiments, the bone conduction sensor 480M may be configured to acquire the vibration signal of a vibrating bone of a vocal part of a human body. The bone conduction sensor 480M may also be configured to contact a pulse of the human body and receive a beating signal of a blood pressure. In some embodiments, the bone conduction sensor 480M may also be disposed in the earphone to obtain a bone conduction earphone. The audio module 470 may be configured to analyze the voice signal based on the vibration signal of the vibration bone of the vocal part obtained by the bone conduction sensor 480M, so as to realize the voice function. The application processor may be configured to analyze heart rate information based on the beating signal of the blood pressure obtained by the bone conduction sensor 480M, so as to realize the detection of heart rate.

The keys 490 include a power-on key, a volume key, and the like. The keys 490 may be mechanical keys or touch keys. The electronic device 100 may receive key inputs and generate key signal inputs related to user settings and function control of the electronic device 100.

The motor 491 may generate a vibrating alert. The motor 491 may be configured to provide the vibrate alert for an incoming call, and may also be configured to provide a touch vibration feedback. For example, touch operations acting on different applications (such as taking a picture, playing an audio, etc.) may correspond to different vibration feedback effects. The motor 491 may also generate different vibration feedback effects for touch operations acting on different areas of the display screen 494. Different application scenarios (for example, reminding time, receiving information, alarm clock, games, etc.) may also correspond to different vibration feedback effects. The touch vibration feedback effects may also be customized.

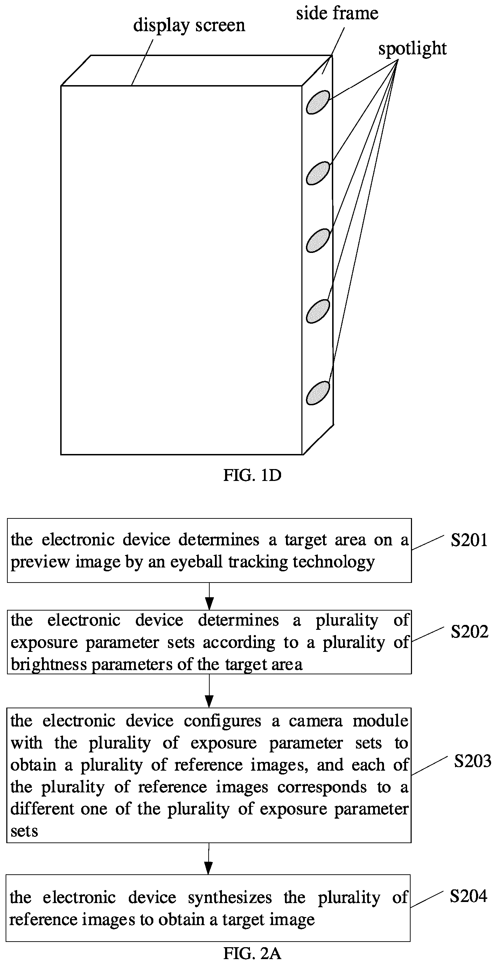

The indicator 492 may be an indicator light, and may be configured to indicate a charging state, a power change, and may also be configured to indicate a message, a missed call, a notification, etc. In addition, the indicator 492 may include spotlights arranged on the side frame of the electronic device 100 as shown in FIG. 1D.

The infrared emitter 495 may be an infrared lamp, and may emit infrared light to irradiate on the human face to form a light spot on the human eye.

The SIM card interface 496 is configured to be connected a SIM card. The SIM card may be inserted into the SIM card interface 496 to contact with the electronic device 100 or pulled out from the SIM card interface 496 to separate from the electronic device 100. The electronic device 100 may support 1 or N SIM card interfaces, and N is a positive integer greater than 1. The SIM card interface 496 may support a Nano SIM card, a Micro SIM card, a SIM card, and so on. A plurality of cards may be inserted into the same SIM card interface 496 simultaneously. The types of the plurality of cards may be the same as each other or different from each other. The SIM card interface 496 may also be compatible with different types of SIM cards. The SIM card interface 496 may also be compatible with an external memory card. The electronic device 100 may interact with the network through the SIM card to realize functions such as calling and data communication. In some embodiments, the electronic device 100 may employ an eSIM, i.e., an embedded SIM card. The eSIM card may be embedded in the electronic device 100 and cannot be separated from the electronic device 100.

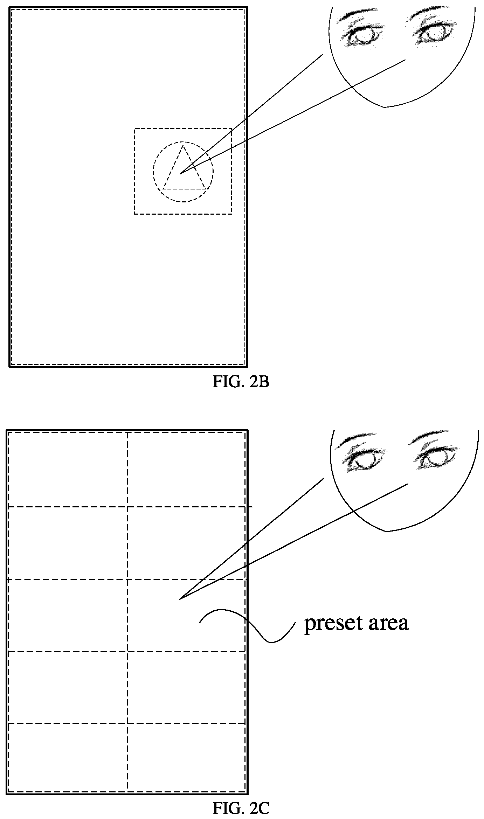

FIG. 2A is a schematic flowchart of an image synthesis method provided by some embodiments of the present disclosure. The image synthesis method may be applied to the electronic device shown in FIGS. 1A -1D. As shown in FIG. 2, the image synthesis method includes the following operations.

S201, the electronic device determines a target area on a preview image by an eyeball tracking technology.

The target area includes at least one gaze point of a user. The gaze point may be a point which is gazed by the user for a gazing duration greater than a preset duration threshold. For example, the preset duration may be 5s, 8s, etc. The target area may be in various shapes, for example, the target area may be a circular area, a rectangular area, a triangular area, a human-shaped area, etc., which is not limited herein.

The electronic device may determine the target area on the preview image by the eyeball tracking technology in various ways. For example, the electronic device may determine at least one gaze point of the user on the preview image by the eyeball tracking technology, and utilize a closed area formed by connecting the at least one gaze point to each other as the target area. In some embodiments, the electronic device may determine one gaze point of the user on the preview image by the eyeball tracking technology, and utilize an area of a preset size with the gaze point as a center as the target area (as shown in FIG. 2B), and the like, which is not limited herein.

S202, the electronic device determines a plurality of exposure parameter sets according to or based on or by using a plurality of brightness parameters of the target area.

The electronic device may extract the plurality of brightness parameters in a real scene corresponding to the target area on the preview image by a preset brightness extraction method.

Each of the plurality of exposure parameter sets includes a plurality of exposure parameters. The plurality of exposure parameters include an aperture value, an exposure value, an exposure duration, and the like.

The electronic device may determine the plurality of exposure parameter sets according to the plurality of brightness parameters of the target area in various ways. For example, the exposure parameter set corresponding to the brightness parameter may be determined according to a preset mapping relationship. In some embodiments, the exposure parameter set required by the user and corresponding to the brightness parameter may be determined through an interaction with the user, which is not limited herein.

The electronic device may also determine the plurality of exposure parameter sets according to the plurality of brightness parameters of the target area by the following operations: determining the exposure value according to each of the plurality of brightness parameters, and determining the aperture value and the exposure duration by using a relationship among the exposure value EV, the aperture value, and the exposure duration:

$$EV = \log_2 \frac{N^2}{t}$$

,. Herein, N represents the aperture value, and t represents the exposure duration in seconds.

S203, the electronic device configures a camera module with the plurality of exposure parameter sets to obtain a plurality of reference images, and each of the plurality of reference images corresponds to a different one of the plurality of exposure parameter sets.

The electronic device sequentially configures the camera module according to the plurality of exposure parameters in each of the plurality of the exposure parameter sets, and captures one reference image at one time.

S204, the electronic device synthesizes the plurality of reference images to obtain a target image.

It can be seen that, in some embodiments of the present disclosure, the electronic device may determine the target area on the preview image by the eyeball tracking technology, determine the plurality of exposure parameter sets according to the plurality of brightness parameters of the target area, configure the camera module with the plurality of exposure parameter sets to obtain the plurality of reference images, and finally synthesize the plurality of reference images to obtain the target image. Herein, each of the plurality of reference images corresponding to a different one of the plurality of exposure parameter sets. It can be seen that the electronic device may perform an image synthesis technology according to the target area focused by the user and obtained by the eyeball tracking technology, such that an image synthesis effect may be improved and the obtained target image may meet the user's demands better. Furthermore, only the brightness parameters of the target area are used to determine the exposure parameter set of each frame of synthesized images. In this way, the exposure parameter sets may be accurately determined, thereby reducing the number of reference images, and reducing a power consumption and a time-delay of a system during an image synthesis process.

In some embodiments, the operation of determining a target area on a preview image by an eyeball tracking technology includes the following operations: obtaining a gaze point on the preview image by the eyeball tracking technology; acquiring a gazing duration of the user for the gaze point; and determining the target area according to the gaze point in response to the gazing duration of the gaze point being greater than a preset duration threshold.

The preset duration threshold may be an empirical value, and may be set in the electronic device by a technical developer before the electronic device leaves the factory. For example, the preset duration may be 3s, 5s, 8s, etc., which is not limited herein.

It can be seen that, in some embodiments, the electronic device determines the target area according to the gaze point of which the gazing duration of the user is greater than the preset duration threshold, instead of determining the target area according to any one of the gaze points. In this way, an accuracy of the target area may be improved, and viewing demands of the user may be met better.

In some embodiments, the operation of determining the target area according to the gaze point includes operations: determining a shape of the target area; and determining the target area according to the shape of the target area with or by using the gaze point as a center point of the shape of the target area.

The operation of determining the shape of the target area may be achieved in various ways. For example, it is possible to determine a type of an object to be photographed corresponding to the gaze point, and determine the shape of the target area according to the type of the object to be photographed. For example, when the type of the object to be photographed is a person, the shape of the target area is determined to be human-shaped; when the type of the object to be photographed is a landscape, the shape of the target area is determined to be rectangular; etc. In some embodiments, the shape of the target area may also be determined according to the object to be photographed corresponding to the gaze point. For example, when the object to be photographed is a human face, the shape of the target area is determined to be circular; when the object to be photographed is a vase, the shape of the target area is determined to be cylindrical; etc., which is not limited herein. In some embodiments, the shape of the target area may also be determined according to a distance between the object to be photographed corresponding to the gaze point and a lens. In some embodiments, the shape of the target area may also be determined according to a color of the object to be photographed corresponding to the gaze point, which is not limited herein.

For example, in case that the shape of the target area is circular, a circular area with the gaze point as a center and a first length as a radius is determined as the target area. The first length may be a static value or a dynamic value. When being a dynamic value, the first length may be associated with a size of the object to be photographed, which is not limited herein.

It can be seen that, in some embodiments, the electronic device determines the target area according to the determined shape of the target area, rather than only using the gaze point as the target area. In this way, the target area may be determined more intelligently and reasonably, and a diversity of the target area may be improved.

In some embodiments, the operation of determining the shape of the target area includes the following operations: determining the type of the object to be photographed corresponding to the gaze point; and determining the shape of the target area according to the type of the object to be photographed.

The type of the object to be photographed may include, for example, a person, a landscape, a static object, etc., which is not limited herein.

The operation of determining the shape of the target area according to the type of the object to be photographed may be executed in various ways. For example, the shape of the target area may be determined according to a preset corresponding relationship between the type of the object to be photographed and the shape of the target area. In some embodiments, the shape of the target area may be determined to be consistent with the most common shape among the types of objects to be photographed, etc., which is not uniquely limited herein.

It can be seen that, in some embodiments, the electronic device determines the shape of the target area according to the type of the object to be photographed corresponding to the gaze point. In this way, the shape may be determined more reasonably, and the diversity of the target area may be improved.

In some embodiments, the operation of determining the target area according to the gaze point includes the following operations: identifying feature information of a preset area in which the gaze point is located; determining an interest feature of the user according to the feature information; determining object information corresponding to the interest feature; and determining an area in which the object information is located as the target area.

The preview image may be divided into a plurality of areas. The area in which the gaze point is located is the preset area (as shown in FIG. 2C). In some embodiments, the preset area may also be an area within 2 cm from the gaze point, which is not limited herein.

The feature information may include various types of information. For example, the feature information may be the feature information of a person, a landscape, a plant, an animal, etc. For example, the feature information of the person may be eyes, and the feature information of the landscape may be a mountain or water, etc., which is not limited herein.

The operation of determining the interest feature of the user according to the feature information may include an operation of using the feature information as an input of a user interest recognition algorithm. For example, a plurality of sets of feature information corresponding to a plurality of gaze points may be input into the interest recognition algorithm for data analysis, so as to obtain the interest feature that matches the interest of the user.

After determining the interest feature of the user, the electronic device determines object information on the preview image that matches the interest feature according to the interest feature of the user, and takes an area in which the object information is located as the target area. That is, the object is taken as a photographing subject, and a focal plane of the photographing is determined. A screen of the electronic device may be pre-divided into a plurality of areas, and the target area is one of the plurality of areas in which the object information is located.

It can be seen that, in some embodiments, the electronic device analyzes the interest feature of the user according to the gaze point, and determines the target area according to the interest feature. In this way, the user's demands may be met better, and the target area may be determined more reasonably.

In some embodiments, the operation of determining a plurality of exposure parameter sets according to a plurality of brightness parameters of the target area includes the following operations: extracting the plurality of brightness parameters of the target area; and querying a preset mapping relationship with the plurality of brightness parameters as an identifier to obtain the plurality of exposure parameter sets corresponding to the plurality of brightness parameters. In some embodiments, the mapping relationship is a relationship between each of the plurality of brightness parameters and each of the plurality of exposure parameter sets. Each of the plurality of exposure parameter sets includes the aperture value, the exposure value, and the exposure duration.

For example, the plurality of exposure parameter sets includes three sets. The first set has an aperture value of 2.0, an exposure value of -3, and an exposure duration of t1. The second set has an aperture value of 2.0, an exposure value of -5, and an exposure duration of t2. The third set has an aperture value of 1.8, an exposure value of -5, and an exposure duration of t2.

It can be seen that, in some embodiments, the electronic device determines the plurality of exposure parameter sets according to the plurality of brightness parameters and the preset mapping relationship, which reduces a complexity of an algorithm, and improves a speed of the image synthesis.

In some embodiments, the operation of determining a plurality of exposure parameter sets according to a plurality of brightness parameters of the target area includes the following operations: extracting the plurality of brightness parameters of the target area; acquiring a plurality of historical adjustment records corresponding to the plurality of brightness parameters; and determining the plurality of exposure parameter sets according to the plurality of historical adjustment records. Herein, each of the plurality of historical adjustment records is associated with any one or more parameters of one of the plurality of exposure parameter sets, and the one of the plurality of exposure parameter sets includes the aperture value, the exposure value, and the exposure duration.

The plurality of historical adjustment records are adjustment records of the user within a preset period, and the preset period may be a month, a week, or a year, etc., which is not limited herein. Each historical adjustment record includes a combination of brightness parameter and any one or more of the aperture value, the exposure value, and the exposure duration. For example, the historical adjustment record includes the brightness parameter and the aperture value, the brightness parameter and the exposure value, or the brightness parameter, the aperture value, and the exposure duration, etc., which is not limited herein.

The operation of determining the plurality of exposure parameter sets according to the plurality of historical adjustment records may include the following operations: querying the historical adjustment records according to the plurality of brightness parameters, determining the plurality of historical adjustment records corresponding to the plurality of brightness parameters, and determining exposure parameter sets corresponding to the plurality of brightness parameters in the historical adjustment records as the plurality of exposure parameter sets.

It can be seen that, in some embodiments, the electronic device is configured to determine the exposure parameter sets according to the brightness parameters and the historical adjustment records. In this way, the intelligence of the image synthesis may be improved, and the demands of the user may be met better.

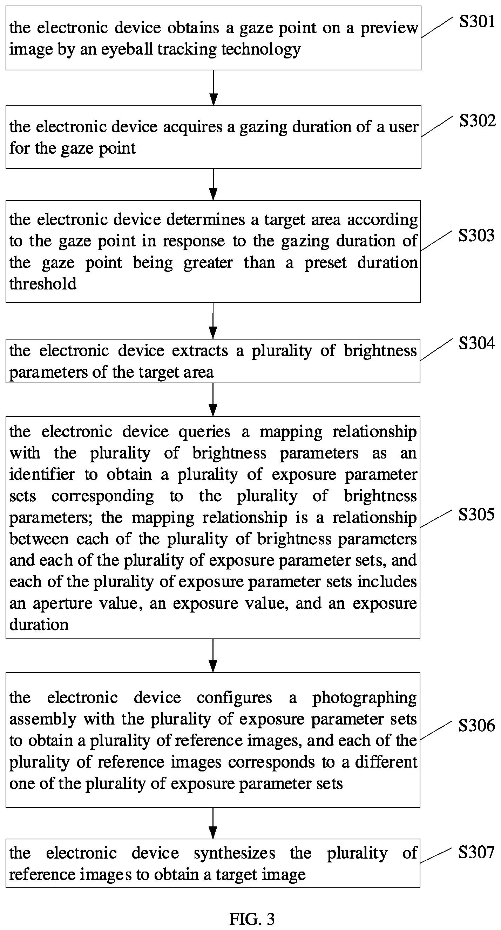

FIG. 3 is a schematic flowchart of another image synthesis method provided by some embodiments of the present disclosure. The image synthesis method may be applied to the electronic device shown in FIGS. 1A -1D. As shown in FIG. 3, the image synthesis method includes the following operations.

S301, the electronic device obtains a gaze point on a preview image by an eyeball tracking technology.

S302, the electronic device acquires a gazing duration of a user for the gaze point.

S303, the electronic device determines a target area according to the gaze point in response to the gazing duration of the gaze point being greater than a preset duration threshold.

S304, the electronic device extracts a plurality of brightness parameters of the target area.

S305, the electronic device queries a mapping relationship with the plurality of brightness parameters as an identifier to obtain a plurality of exposure parameter sets corresponding to the plurality of brightness parameters. In some embodiments, the mapping relationship is a relationship between each of the plurality of brightness parameters and each of the plurality of exposure parameter sets, and each of the plurality of exposure parameter sets includes an aperture value, an exposure value, and an exposure duration.

S306, the electronic device configures a camera module with the plurality of exposure parameter sets to obtain a plurality of reference images, and each of the plurality of reference images corresponds to a different one of the plurality of exposure parameter sets.

S307, the electronic device synthesizes the plurality of reference images to obtain a target image.

It can be seen that, in some embodiments of the present disclosure, the electronic device may determine the target area on the preview image by the eyeball tracking technology, determine the plurality of exposure parameter sets according to the plurality of brightness parameters of the target area, configure a camera module using the plurality of exposure parameter sets to obtain a plurality of reference images, and finally synthesize the plurality of reference images to obtain a target image. Herein, each of the plurality of reference images corresponds to a different one of the plurality of exposure parameter sets. It can be seen that the electronic device may perform an image synthesis technology according to the target area focused by the user and obtained by the eyeball tracking technology, such that an image synthesis effect may be improved and the obtained target image may meet the user's demands better. Furthermore, only the brightness parameters of the target area are used to determine the exposure parameter sets of each frame of synthesized images. In this way, the exposure parameter sets may be accurately determined, thereby reducing the number of reference images, and reducing a power consumption and a time-delay of a system during an image synthesis process.

In addition, the electronic device determines the target area according to the gaze point of which the gazing duration of the user is greater than the preset duration threshold, instead of determining the target area according to any one of the gaze points. In this way, an accuracy of the target area may be improved, and viewing demands of the user may be met better.

In addition, the electronic device determines the plurality of exposure parameter sets according to the plurality of brightness parameters and the preset mapping relationship, which reduces a complexity of an algorithm, and improves a speed of the image synthesis.

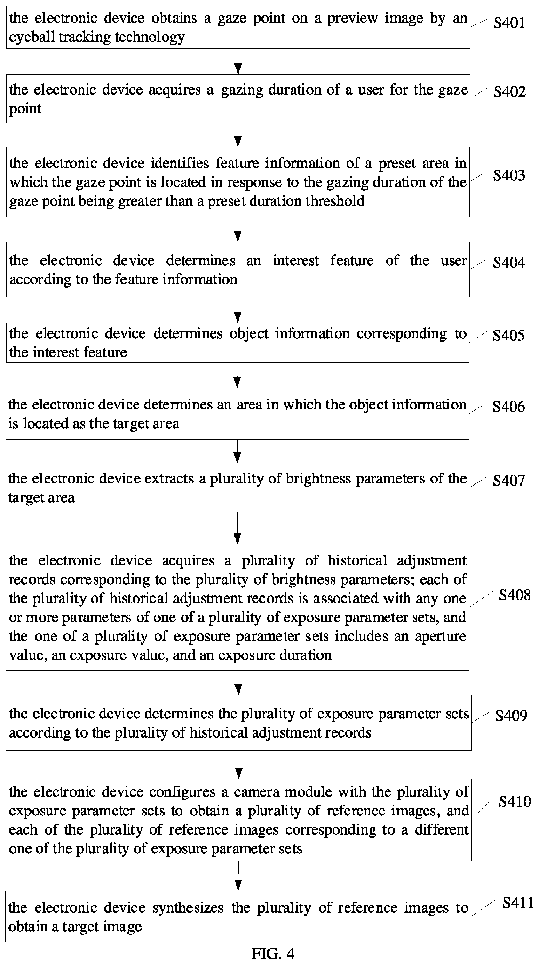

FIG. 4 is a schematic flowchart of another image synthesis method provided by some embodiments of the present disclosure. The image synthesis method may be applied to the electronic device shown in FIGS. 1A -1D. As shown in FIG. 4, the image synthesis method includes the following operations.

S401, the electronic device obtains a gaze point on a preview image by an eyeball tracking technology.

S402, the electronic device acquires gazing duration of a user for the gaze point.

S403, the electronic device identifies feature information of a preset area in which the gaze point is located in response to the gazing duration of the gaze point being greater than a preset duration threshold.

S404, the electronic device determines an interest feature of the user according to the feature information.

S405, the electronic device determines object information corresponding to the interest feature.

S406, the electronic device determines an area in which the object information is located as the target area.

S407, the electronic device extracts a plurality of brightness parameters of the target area.

S408, the electronic device acquires a plurality of historical adjustment records corresponding to the plurality of brightness parameters. In some embodiments, each of the plurality of historical adjustment records is associated with any one or more parameters of one of a plurality of exposure parameter sets, and the one of a plurality of exposure parameter sets includes an aperture value, an exposure value, and an exposure duration.

S409, the electronic device determines the plurality of exposure parameter sets according to the plurality of historical adjustment records.

S410, the electronic device configures a camera module with the plurality of exposure parameter sets to obtain a plurality of reference images, and each of the plurality of reference images corresponding to a different one of the plurality of exposure parameter sets.

S411, the electronic device synthesizes the plurality of reference images to obtain a target image.

It can be seen that, in some embodiments of the present disclosure, the electronic device determines a target area on a preview image by an eyeball tracking technology, determines a plurality of exposure parameter sets according to a plurality of brightness parameters of the target area, configures a camera module using the plurality of exposure parameter sets to obtain a plurality of reference images, and finally synthesizes the plurality of reference images to obtain a target image. Herein, each of the plurality of reference images corresponds to a different one of the plurality of exposure parameter sets. It can be seen that the electronic device may perform an image synthesis technology according to the target area focused by the user and obtained by the eyeball tracking technology, such that an image synthesis effect may be improved and the obtained target image may meet the user's demands better. Furthermore, only the brightness parameters of the target area are used to determine the exposure parameter set of each frame of synthesized images. In this way, the exposure parameter sets may be accurately determined, thereby reducing the number of reference images, and reducing a power consumption and a time-delay of a system during an image synthesis process.

In addition, the electronic device determines the exposure parameter sets according to the brightness parameters and the historical adjustment records. In this way, the image synthesis may be more intelligent, and the demands of the user better.

In addition, the electronic device analyzes the interest feature of the user according to the gaze point, and determines the target area according to the interest feature. In this way, the user's demands may be met better, and the target area may be determined more reasonably.

Some embodiments of the present disclosure provide an image synthesis apparatus. The image synthesis apparatus may be the electronic device 100. Specifically, the image synthesis apparatus is configured to execute the operations of the aforementioned image synthesis methods. The image synthesis apparatus provided by some embodiments of the present disclosure may include modules corresponding to corresponding operations.

In some embodiments of the present disclosure, the image synthesis apparatus may be divided into function modules according to the foregoing method examples. For example, each function module may be divided corresponding to each function, or two or more functions may be integrated into one processing module. The aforementioned integrated module may be implemented in a form of hardware, or may also be implemented in a form of software function module. The division of modules in some embodiments of the present disclosure is schematic, is only a logical function division, and there may be other division manners in actual implementation.

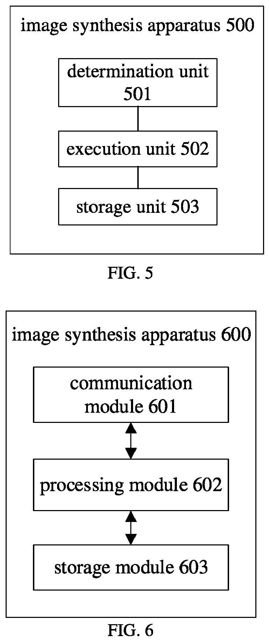

In the case that each function module is divided according to each function, FIG. 5 shows a possible schematic structural diagram of the image synthesis apparatus involved in the aforesaid embodiments. As shown in FIG. 5, the image synthesis apparatus 500 includes a determination unit 501 and an execution unit 502.

The determination unit 501 is configured to determine a target area on a preview image by an eyeball tracking technology, and determine a plurality of exposure parameter sets according to a plurality of brightness parameters of the target area.

The execution unit 502 is configured to configure a camera module with the plurality of exposure parameter sets to obtain a plurality of reference images, and synthesize the plurality of reference images into a target image. Each of the plurality of reference images corresponds to a different one of the plurality of exposure parameter sets.

All relevant contents of the operations involved in the aforesaid method embodiments may be cited in the descriptions of the functions of the corresponding function modules, which will not be repeated here. Of course, the image synthesis apparatus provided in some embodiments of the present disclosure includes but is not limited to the aforementioned modules. For example, the image synthesis apparatus may further include a storage unit 503. The storage unit 503 may be configured to store program codes and data of the image synthesis apparatus.

In the case of using an integrated unit, a schematic structural diagram of the image synthesis apparatus provided by some embodiments of the present disclosure is shown in FIG. 6. As shown in FIG. 6, the image synthesis apparatus 600 includes a processing module 602 and a communication module 601. The processing module 602 is configured to control and manage actions of the image synthesis apparatus, for example, to execute the operations executed by the determination unit 501 and the execution unit 502, and/or to execute other processes of the techniques described herein. The communication module 601 is configured to support interactions among the image synthesis apparatus and other apparatuses. As shown in FIG. 6, the image synthesis apparatus may further include a storage module 603. The storage module 603 is configured to store program codes and data of the image synthesis apparatus, for example, to store contents saved by the aforementioned storage unit 503.

The processing module 602 may be a processor or a controller, for example, a central processing unit (CPU), a general-purpose processor, a digital signal processor (DSP), an ASIC, a FPGA, or other programmable Logic devices, transistor logic devices, hardware components, or any combination thereof. The processing module 602 may implement or execute the various exemplary logical blocks, modules, and circuits described in combination with the present disclosure. The processor may also be a combination that implements computing functions, such as a combination of one or more microprocessors, a combination of the DSP and the microprocessor, and the like. The communication module 601 may be a transceiver, an RF circuit, a communication interface, or the like. The storage module 603 may be a memory.

All the relevant contents of the scenarios involved in the aforesaid method embodiments may be cited in the descriptions of the functions of the corresponding function modules, which will not be repeated here. The image synthesis apparatus 500 and the image synthesis apparatus 600 may both able to perform the image synthesis method shown in any one of the aforementioned FIGS. 2A-4.

Some embodiments of the present disclosure further provide a computer storage medium. The computer storage medium stores a computer program for an exchange of electronic data. The computer program causes a computer to perform part or all of the operations of any one of the methods described in the aforesaid method embodiments, and the aforesaid computer includes an electronic device.

Some embodiments of the present disclosure further provide a computer program product. The computer program product includes a non-transitory computer-readable storage medium storing a computer program, and the computer program is operable to cause a computer to perform part or all of the operations of any one of the methods described in the aforesaid method embodiments. The computer program product may be a software installation package, and the computer includes an electronic device.

It should be noted that, for the foregoing method embodiments, for the sake of brevity, the method embodiments are all described as a combination of a series of actions or operations. However, those skilled in the art should understand that the present disclosure is not limited by a sequence of the actions or operations described here. Some operations may be performed in other sequences or simultaneously in accordance with the present disclosure. Those skilled in the art should also understand that some embodiments described in the specification are all optional embodiments, and the actions and the modules involved are not necessarily required by the present disclosure.

In the aforementioned embodiments, the description of each embodiment has its own emphasis. For the parts that are not described in detail in a certain embodiment, reference may be made to the relevant descriptions of other embodiments.

In several embodiments provided herein, it should be understood that the disclosed apparatus may be implemented in other ways. For example, the device embodiments described above are merely illustrative. For example, the division of the aforesaid units is only a logical function division. In actual implementation, there may be another division manner. For example, multiple units or components may be combined or integrated into another system, or some features can be ignored or not executed. In addition, the mutual coupling or direct coupling or communication connection shown or discussed may be an indirect coupling or communication connection through some interfaces, devices or units, and may be electrical or in other forms.

In addition, each functional unit in each embodiment of the present disclosure may be integrated into one processing unit, or each unit may exist physically separately. Optionally, two or more units may also be integrated into one unit. The aforesaid integrated unit can be implemented in the form of hardware or in the form of a software functional module. The aforesaid described integrated unit may be stored in a computer-readable memory if the integrated unit is implemented in the form of a software functional module and sold or used as a standalone product. Based on such understanding, the technical solution of the present disclosure, in essence or the contribution to the related art, or all or part of the technical solution may be embodied in the form of a software product. The software product may be stored in a memory. The software product may include a number of instructions causing a computer device (the computer device may be a personal computer, a server or a network device, and the like) to execute all or parts of the operations of the aforesaid described methods of various embodiments of the present disclosure. The foregoing memory may include a U disk, a Read-Only Memory (ROM), a Random Access Memory (RAM), a removable hard disk, a magnetic disk, an optical disk, and other media that can store program codes. Those skilled in the art can understand that all or part of the operations in the various methods of the aforesaid embodiments can be completed by instructing relevant hardware through a program, and the program can be stored in a computer-readable memory. The memory can include: a flash disk, a read-only memory (Read-Only Memory, ROM), a random access device (Random Access Memory, RAM), a magnetic disk, or an optical disk, etc. Some embodiments of the present disclosure have been described in detail above. The principles and implementations of the present disclosure are described in the specific examples. The description of the aforesaid embodiments is only configured to help understanding the methods of the present disclosure and the core ideas. For those skilled in the art, there will have a change in the specific embodiments and the application scope of present disclosure according to the idea of the present disclosure. In summary, the content of the present specification should not be construed as limiting the present disclosure.

**Claims**

1. An image synthesis method, comprising:

   determining a target area on a preview image by an eyeball tracking technology;
   determining a plurality of exposure parameter sets according to a plurality of brightness parameters of the target area;
configuring a camera module with the plurality of exposure parameter sets to obtain a plurality of reference images, and each of the plurality of reference images corresponding to a different one of the plurality of exposure parameter sets; and
synthesizing the plurality of reference images to obtain a target image.

2. The method according to claim 1, wherein the determining a target area on a preview image by an eyeball tracking technology comprises:

   obtaining a gaze point on the preview image by the eyeball tracking technology;
   acquiring a gazing duration of a user for the gaze point; and
   determining the target area according to the gaze point in response to the gazing duration of the gaze point being greater than a preset duration threshold.

3. The method according to claim 2, wherein the determining the target area according to the gaze point comprises:

   determining a shape of the target area; and
   determining the target area according to the shape of the target area with the gaze point as a center point of the shape of the target area.

4. The method according to claim 3, wherein the determining a shape of the target area comprises:

   determining a type of an object to be photographed corresponding to the gaze point; and
   determining the shape of the target area according to the type of the object to be photographed.

5. The method according to claim 2, wherein the determining the target area according to the gaze point comprises:

   identifying feature information of a preset area in which the gaze point is located;
   determining an interest feature of the user according to the feature information;
   determining object information corresponding to the interest feature; and
   determining an area in which the object information is located as the target area.

6. The method according to any one of claims 1-5, wherein the determining a plurality of exposure parameter sets according to a plurality of brightness parameters of the target area comprises:

extracting the plurality of brightness parameters of the target area; and

querying a preset mapping relationship with the plurality of brightness parameters as an identifier to obtain the plurality of exposure parameter sets corresponding to the plurality of brightness parameters, wherein the mapping relationship is a relationship between each of the plurality of brightness parameters and each of the plurality of exposure parameter sets, and each of the plurality of exposure parameter sets comprises an aperture value, an exposure value, and an exposure duration.

7. The method according to any one of claims 1-6, wherein the determining a plurality of exposure parameter sets according to a plurality of brightness parameters of the target area comprises:

extracting the plurality of brightness parameters of the target area;

acquiring a plurality of historical adjustment records corresponding to the plurality of brightness parameters, wherein each of the plurality of historical adjustment records is associated with any one or more parameters of one of the plurality of exposure parameter sets, and the one of the plurality of exposure parameter sets comprises an aperture value, an exposure value, and exposure duration; and

determining the plurality of exposure parameter sets according to the plurality of historical adjustment records.

8. An image synthesis apparatus, wherein the image synthesis apparatus comprises a determination unit and an execution unit;

the determination unit is configured to determine a target area on a preview image by an eyeball tracking technology, and determine a plurality of exposure parameter sets according to a plurality of brightness parameters of the target area;

the execution unit is configured to configure a camera module with the plurality of exposure parameter sets to obtain a plurality of reference images, and synthesize the plurality of reference images to obtain a target image; and

each of the plurality of reference images corresponding to a different one of the plurality of exposure parameter sets.

9. The image synthesis apparatus according to claim 8, wherein, in an aspect of determining a target area on a preview image by an eyeball tracking technology, the determination unit is further configured to:

obtain a gaze point on the preview image by the eyeball tracking technology;

acquire a gazing duration of a user for the gaze point; and

determine the target area according to the gaze point in response to the gazing duration of the gaze point being greater than a preset duration threshold.

10. The image synthesis apparatus according to claim 9, wherein, in an aspect of determining the target area according to the gaze point, the determination unit is further configured to:

determine a shape of the target area; and

determine the target area according to the shape of the target area with the gaze point as a center point of the shape of the target area.

11. The image synthesis apparatus according to claim 10, wherein, in an aspect of determining a shape of the target area, the determination unit is further configured to:

determine a type of an object to be photographed corresponding to the gaze point; and

determine the shape of the target area according to the type of the object to be photographed.

12. The image synthesis apparatus according to claim 9, wherein, in an aspect of determining the target area according to the gaze point, the determination unit is further configured to:

identify feature information of a preset area in which the gaze point is located;

determine an interest feature of the user according to the feature information;

determine object information corresponding to the interest feature; and

determine an area in which the object information is located as the target area.

13. The image synthesis apparatus according to any one of claims 8-12, wherein, in an aspect of determining a plurality of exposure parameter sets according to a plurality of brightness parameters of the target area, the determination unit is further configured to:

extract the plurality of brightness parameters of the target area; and

query a preset mapping relationship with the plurality of brightness parameters as an identifier to obtain the plurality of exposure parameter sets corresponding to the plurality of brightness parameters, wherein the mapping relationship is a relationship between each of the plurality of brightness parameters and each of the plurality of exposure parameter sets, and each of the plurality of exposure parameter sets comprises an aperture value, an exposure value, and an exposure duration.

14. The image synthesis apparatus according to any one of claims 8-13, wherein, in an aspect of determining a plurality of exposure parameter sets according to a plurality of brightness parameters of the target area, the determination unit is further configured to:

> extract the plurality of brightness parameters of the target area;
> acquire a plurality of historical adjustment records corresponding to the plurality of brightness parameters, wherein each of the plurality of historical adjustment records is associated with any one or more parameters of one of the plurality of exposure parameter sets, and the one of the plurality of exposure parameter sets comprises an aperture value, an exposure value, and an exposure duration; and
> determine the plurality of exposure parameter sets according to the plurality of historical adjustment records.

15. The image synthesis apparatus according to claim 8, wherein the image synthesis apparatus further comprises a storage unit for storing program code and data of the image synthesis apparatus.

16. An image synthesis apparatus, wherein the image synthesis apparatus comprises a processing module, and the processing module is configured to:

> determine a target area on a preview image by an eyeball tracking technology;
> determine a plurality of exposure parameter sets according to a plurality of brightness parameters of the target area;
> configure a camera module with the plurality of exposure parameter sets to obtain a plurality of reference images, and each of the plurality of reference images corresponding to a different one of the plurality of exposure parameter sets; and
> synthesize the plurality of reference images to obtain a target image.

17. The image synthesis apparatus according to claim 16, wherein, in an aspect of determining a target area on a preview image by an eyeball tracking technology, the processing module is further configured to:

> obtain a gaze point on the preview image by the eyeball tracking technology;
> acquire a gazing duration of a user for the gaze point; and
> determine the target area according to the gaze point in response to the gazing duration of the gaze point being greater than a preset duration threshold.

18. An electronic device comprising a processor, a memory, a communication interface, and one or more programs, the one or more programs being stored in the memory and configured to be executing by the processor, and the one or more programs comprising instructions for performing the operations in the method of any one of claims 1-7.

19. A computer-readable storage medium storing a computer program for an exchange of electronic data, wherein the computer program causes a computer to perform the method of any one of claims 1-7.

20. A computer program causing a computer to perform the method of any one of claims 1-7.

120

memory

110    130

processor    input-output device

FIG. 1A

memory 120

| application layer 280 | | |
|---|---|---|
| password | eyeball tracking | |
| calendar | call | |
| map | navigation | . . . |

| application framework layer 260 | | |
|---|---|---|
| window manager | content provider | view system |
| phone manager | resource manager | notification manager |
| message manager | . . . | |

| system runtime library layer 240 | |
|---|---|
| SQLite library | OpenGL/ES |
| Webkit | Android runtime library |

| Linux kernel layer 220 | |
|---|---|
| display drive | Bluetooth drive |
| audio drive | Wi-Fi drive |
| camera drive | power management |

110    130

processor    input-output device

FIG. 1B

FIG. 1C

display screen     side frame     spotlight

FIG. 1D

| | |
|---|---|
| the electronic device determines a target area on a preview image by an eyeball tracking technology | S201 |
| the electronic device determines a plurality of exposure parameter sets according to a plurality of brightness parameters of the target area | S202 |
| the electronic device configures a camera module with the plurality of exposure parameter sets to obtain a plurality of reference images, and each of the plurality of reference images corresponds to a different one of the plurality of exposure parameter sets | S203 |
| the electronic device synthesizes the plurality of reference images to obtain a target image | S204 |

FIG. 2A

FIG. 2B

preset area

FIG. 2C

the electronic device obtains a gaze point on a preview image by an eyeball tracking technology — S301

the electronic device acquires a gazing duration of a user for the gaze point — S302

the electronic device determines a target area according to the gaze point in response to the gazing duration of the gaze point being greater than a preset duration threshold — S303

the electronic device extracts a plurality of brightness parameters of the target area — S304

the electronic device queries a mapping relationship with the plurality of brightness parameters as an identifier to obtain a plurality of exposure parameter sets corresponding to the plurality of brightness parameters; the mapping relationship is a relationship between each of the plurality of brightness parameters and each of the plurality of exposure parameter sets, and each of the plurality of exposure parameter sets includes an aperture value, an exposure value, and an exposure duration — S305

the electronic device configures a photographing assembly with the plurality of exposure parameter sets to obtain a plurality of reference images, and each of the plurality of reference images corresponds to a different one of the plurality of exposure parameter sets — S306

the electronic device synthesizes the plurality of reference images to obtain a target image — S307

FIG. 3

the electronic device obtains a gaze point on a preview image by an eyeball tracking technology — S401

↓

the electronic device acquires a gazing duration of a user for the gaze point — S402

↓

the electronic device identifies feature information of a preset area in which the gaze point is located in response to the gazing duration of the gaze point being greater than a preset duration threshold — S403

↓

the electronic device determines an interest feature of the user according to the feature information — S404

↓

the electronic device determines object information corresponding to the interest feature — S405

↓

the electronic device determines an area in which the object information is located as the target area — S406

↓

the electronic device extracts a plurality of brightness parameters of the target area — S407

↓

the electronic device acquires a plurality of historical adjustment records corresponding to the plurality of brightness parameters; each of the plurality of historical adjustment records is associated with any one or more parameters of one of a plurality of exposure parameter sets, and the one of a plurality of exposure parameter sets includes an aperture value, an exposure value, and an exposure duration — S408

↓

the electronic device determines the plurality of exposure parameter sets according to the plurality of historical adjustment records — S409

↓

the electronic device configures a camera module with the plurality of exposure parameter sets to obtain a plurality of reference images, and each of the plurality of reference images corresponding to a different one of the plurality of exposure parameter sets — S410

↓

the electronic device synthesizes the plurality of reference images to obtain a target image — S411

FIG. 4

EP 4 135 308 A1

FIG. 5

FIG. 6

25

## INTERNATIONAL SEARCH REPORT

| | International application No. |
|---|---|
| | **PCT/CN2021/079663** |

| A. | CLASSIFICATION OF SUBJECT MATTER |
|---|---|

H04N 5/232(2006.01)i;  H04N 5/235(2006.01)i;  G06F 3/01(2006.01)i

According to International Patent Classification (IPC) or to both national classification and IPC

| B. | FIELDS SEARCHED |
|---|---|

Minimum documentation searched (classification system followed by classification symbols)

    H04N

Documentation searched other than minimum documentation to the extent that such documents are included in the fields searched

Electronic data base consulted during the international search (name of data base and, where practicable, search terms used)

    CNABS, CNTXT, CNKI, VEN, EPTXT, USTXT, WOTXT, GOOGLE, IEEE: 亮度, 光圈, 曝光, 目标, 区域, 对象, 图像, 影像, 照片, 图片, 合成, 组合, 组成, 眼, 追踪, 跟踪, 预览, 多, 不同, 两个, 2个, exposure, image, eye, synthesize, compose, combine, analysis, bright, track, two, differ, multiple, preview

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 111510626 A (GUANGDONG OPPO MOBILE TELECOMMUNICATIONS CORP., LTD.) 07 August 2020 (2020-08-07)<br>    claims 1-10 | 1-20 |
| Y | CN 105657289 A (GUANGDONG OPPO MOBILE TELECOMMUNICATIONS CORP., LTD.) 08 June 2016 (2016-06-08)<br>    description, paragraphs [0065]-[0120], and figures 1-16 | 1-20 |
| Y | CN 105759959 A (GUANGDONG OPPO MOBILE TELECOMMUNICATIONS CORP., LTD.) 13 July 2016 (2016-07-13)<br>    description, paragraphs [0037]-[0080], and figures 1-2 | 1-20 |
| Y | CN 108833802 A (GUANGDONG OPPO MOBILE TELECOMMUNICATIONS CORP., LTD.) 16 November 2018 (2018-11-16)<br>    description, paragraphs [0030]-[0108], and figures 1-6 | 1-20 |
| Y | CN 108683862 A (GUANGDONG OPPO MOBILE TELECOMMUNICATIONS CORP., LTD.) 19 October 2018 (2018-10-19)<br>    description, paragraphs [0030]-[0117], and figures 1-6 | 1-20 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| **25 April 2021** | **31 May 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/079663** |

**C. DOCUMENTS CONSIDERED TO BE RELEVANT**

| Category* | Citation of document, with indication, where appropriate, of the relevant passages | Relevant to claim No. |
| --- | --- | --- |
| Y | CN 110245250 A (GUANGDONG OPPO MOBILE TELECOMMUNICATIONS CORP., LTD.) 17 September 2019 (2019-09-17) description, paragraphs [0028]-[0118], and figures 1-6 | 1-20 |
| A | CN 109496425 A (HUAWEI TECHNOLOGIES CO., LTD.) 19 March 2019 (2019-03-19) entire document | 1-20 |
| A | CN 110493538 A (OPPO GUANGDONG MOBILE COMMUNICATIONS CO., LTD.) 22 November 2019 (2019-11-22) entire document | 1-20 |
| A | JP 3420303 B2 (CANON K. K.) 23 June 2003 (2003-06-23) entire document | 1-20 |
| A | US 2015022693 A1 (TEXAS INSTRUMENTS INC.) 22 January 2015 (2015-01-22) entire document | 1-20 |

Form PCT/ISA/210 (second sheet) (January 2015)

**INTERNATIONAL SEARCH REPORT**
Information on patent family members

International application No.

**PCT/CN2021/079663**

| Patent document cited in search report | | | Publication date (day/month/year) | Patent family member(s) | | | Publication date (day/month/year) |
|---|---|---|---|---|---|---|---|
| CN | 111510626 | A | 07 August 2020 | None | | | |
| CN | 105657289 | A | 08 June 2016 | CN | 105657289 | B | 08 May 2018 |
| CN | 105759959 | A | 13 July 2016 | None | | | |
| CN | 108833802 | A | 16 November 2018 | CN | 108833802 | B | 31 July 2020 |
| CN | 108683862 | A | 19 October 2018 | EP | 3611916 | A1 | 19 February 2020 |
| | | | | CN | 108683862 | B | 10 January 2020 |
| | | | | US | 10630906 | B2 | 21 April 2020 |
| | | | | WO | 2020034735 | A1 | 20 February 2020 |
| | | | | US | 2020053265 | A1 | 13 February 2020 |
| | | | | HK | 1258242 | A0 | 08 November 2019 |
| | | | | IN | 201914005059 | A | 14 February 2020 |
| CN | 110245250 | A | 17 September 2019 | None | | | |
| CN | 109496425 | A | 19 March 2019 | CN | 110166703 | B | 19 May 2020 |
| | | | | CN | 111147739 | A | 12 May 2020 |
| | | | | WO | 2019183819 | A1 | 03 October 2019 |
| | | | | EP | 3633975 | A4 | 29 July 2020 |
| | | | | JP | 6834056 | B2 | 24 February 2021 |
| | | | | CN | 112437227 | A | 02 March 2021 |
| | | | | CN | 109496425 | B | 21 February 2020 |
| | | | | AU | 2018415738 | A1 | 17 September 2020 |
| | | | | EP | 3633975 | A1 | 08 April 2020 |
| | | | | US | 2020128191 | A1 | 23 April 2020 |
| | | | | CN | 111314603 | A | 19 June 2020 |
| | | | | CN | 111355886 | A | 30 June 2020 |
| | | | | BR | 112020019324 | A2 | 05 January 2021 |
| | | | | CN | 110166703 | A | 23 August 2019 |
| | | | | KR | 20200019728 | A | 24 February 2020 |
| | | | | JP | 2020527000 | A | 31 August 2020 |
| | | | | IN | 202047002899 | A | 31 January 2020 |
| CN | 110493538 | A | 22 November 2019 | None | | | |
| JP | 3420303 | B2 | 23 June 2003 | JP | H07131708 | A | 19 May 1995 |
| | | | | US | 6204881 | | 20 March 2001 |
| US | 2015022693 | A1 | 22 January 2015 | US | 9554057 | B2 | 24 January 2017 |

Form PCT/ISA/210 (patent family annex) (January 2015)